Europäisches Patentamt

European Patent Office

Office européen des brevets

(19)

(11) Numéro de publication: **0 062 708**
**A2**

(12) # DEMANDE DE BREVET EUROPEEN

(21) Numéro de dépôt: **81201396.9**

(22) Date de dépôt: **24.12.81**

(51) Int. Cl.³: **B 65 D 23/10**
**A 47 G 23/02**

(30) Priorité: **13.04.81 BE 204465**

(43) Date de publication de la demande:
**20.10.82 Bulletin 82/42**

(84) Etats contractants désignés:
**AT CH DE FR GB IT LI LU NL SE**

(71) Demandeur: **Mecanauto**
**Val des Seigneurs, 138**
**Woluwe-Saint-Pierre(BE)**

(72) Inventeur: **Dejardin, Serge**
**rue Champ l'Abbé, 3**
**B-1320 Genval(BE)**

(74) Mandataire: **Pirson, Jean et al,**
**c/o Bureau GEVERS SA 7 rue de Livourne Bte 1**
**B-1050 Brussels(BE)**

(54) **Récipient.**

(57) Récipient (1), en particulier bouteille isolante, pourvu d'une poignée (2) disposée en saillie par rapport au récipient, ladite poignée étant indépendante du récipient et présentant, à l'endroit où elle se raccorde audit récipient, deux pattes profilées (4) et (5) agencées de part et d'autre de la poignée et destinées à enserrer le récipient sur une partie importante de sa surface latérale (6), des moyens (7) étant prévus pour immobiliser lesdites pattes par rapport au récipient.

Fig.1

EP 0 062 708 A2

"Récipient"

La présente invention a pour objet un récipient, en particulier bouteille isolante, pourvu d'une poignée disposée en saillie par rapport au récipient.

Les récipients connus et en particulier les bouteilles isolantes à poignée disposée en saillie, par rapport à l'enveloppe de la bouteille, sont de deux types, à savoir poignée intégrée et poignée rapportée, qui présentent chacun des inconvénients. En ce qui concerne les bouteilles isolantes dont l'enveloppe a une poignée faisant corps avec cette dernière, elles présentent une certaine fragilité à l'endroit ou aux endroits de raccordement de la poignée à l'enveloppe et requièrent un appareillage complexe et onéreux pour leur fabrication. Quant aux bouteilles isolantes dont la poignée est rapportée à l'enveloppe, elles nécessitent, pour la fixation de la poignée, soit des pièces métalliques intermédiaires, soit des vis et il faut prévoir des renforcements de l'enveloppe et de la poignée pour recevoir ces pièces et vis, ce qui rend complexe la réalisation de l'enveloppe et de la poignée et réclame des opérations d'assemblage non négligeables.

L'invention a pour but de remédier à ces inconvénients et de procurer un récipient, en particulier une bouteille isolante à poignée rapportée, qui présente, tout en améliorant son aspect esthétique, une grande solidité au niveau du raccordement de la poignée à l'enveloppe, qui peut être fabriquée à l'aide de matériel simple et qui réclame, pour l'assemblage de la poignée à l'enveloppe, des opérations d'assemblage particulièrement réduites.

A cet effet, suivant l'invention, ladite poignée est indépendante du récipient et présente, à l'endroit où elle se raccorde audit récipient, deux pattes profilées agencées de part et d'autre de la poignée et destinées à enserrer le récipient sur une partie importante de sa surface latérale, des moyens étant prévus pour immobiliser lesdites pattes par rapport au récipient.

Suivant une forme de réalisation de l'invention, les pattes précitées sont symétriques par rapport à la poignée.

Suivant un mode de réalisation avantageux de l'invention, les pattes ont une hauteur sensiblement égale à celle de la poignée et s'étendent sous cette dernière de manière à se rejoindre et à enserrer le récipient sur une partie continue de sa surface latérale.

Suivant une forme de réalisation particulièrement avantageuse de l'invention, les moyens susdits pour immobiliser les pattes par rapport au récipient comprennent une cavité, ménagée à la surface du récipient, dont la forme et la surface correspondent aux forme et surface de chacune des pattes.

D'autres détails et particularités de l'invention ressortiront de la description des dessins annexés au présent mémoire et qui représentent, à titre d'exemples non limitatifs, deux formes de réalisation particulières du récipient suivant l'invention.

La figure 1 est une vue en élévation, avec brisures partielles, d'une bouteille isolante suivant l'invention.

La figure 2 est une vue en coupe suivant la ligne II-II de la figure 1.

La figure 3 est une vue en élévation montrant une variante de la bouteille isolante représentée à la figure 1.

La figure 4 est une vue en coupe suivant la ligne IV-IV de la figure 3.

Dans les différentes figures, les mêmes notations de référence désignent des éléments identiques ou analogues.

La bouteille isolante 1 suivant l'invention et représentée aux dessins est pourvue d'une poignée 2 disposée en saillie par rapport à l'enveloppe 3 de la bouteille. Cette poignée 2 est indépendante de l'enveloppe 3 et présente, à l'endroit où elle se raccorde à l'enveloppe, deux pattes profilées 4 et 5 s'étendant de part et d'autre de la poignée 2 et destinées à enserrer l'enveloppe sur une partie importante de sa surface latérale 6, des moyens 7 étant prévus pour immobiliser les pattes 4 et 5 par rapport à l'enveloppe 3. Les pattes 4 et 5 sont symétriques par rapport à la poignée et ont avantageusement une hauteur sensiblement égale à celle de la poignée, ces pattes s'étendant en outre avantageusement sous ladite poignée de manière à se rejoindre, sur toute leur hauteur, et à enserrer le récipient sur une partie continue de sa surface latérale 6.

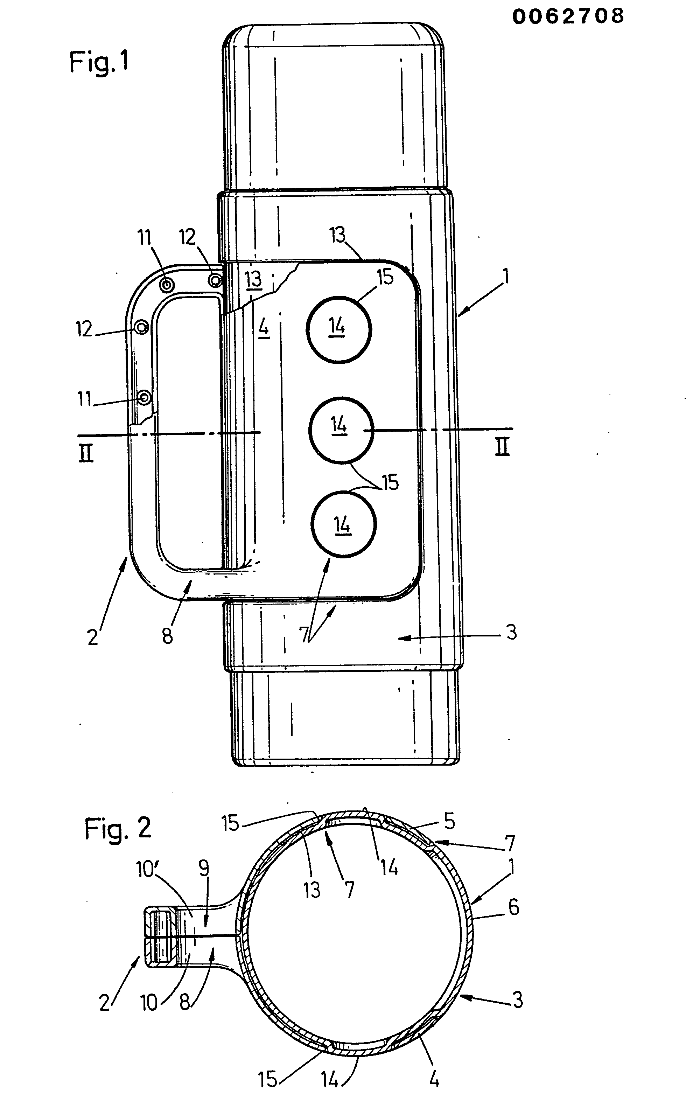

La bouteille isolante montrée aux figures 1 et 2 a une poignée 2 et des pattes 4 et 5 réalisées en deux parties symétriques 8 et 9 constituées chacune d'une patte et d'une demi-poignée 10, 10'. Des moyens d'assemblage sont prévus, au niveau de chaque demi-poignée, pour permettre l'assemblage des deux parties 8 et 9 lorsque les pattes 4 et 5 sont appliquées sur la surface latérale 6 de l'enveloppe 3. Ces moyens d'assemblage sont constitués par des ergots 11, présentés par chacune des demi-poignées, destinés à s'introduire dans des cavités correspondantes 12 ménagées dans chacune desdites demi-poignées. Les moyens 7 précités pour immobiliser les pattes 4 et 5 par rapport à l'enveloppe 3 sont constitués, d'une part, par une cavité 13 ménagée à la surface 6 de l'enveloppe et dont la forme et la surface correspondent aux forme et surface de chacune des pattes 4 et 5 et, d'autre part, par des saillies 14, présentées par la surface 6, coopérant avec des évidements correspondants 15 ménagés dans les pattes 4 et 5. L'épaisseur des pattes 4 et 5 correspond sensiblement à la profondeur de la cavité 13. Le montage de la poignée 2 s'effectue en disposant les pattes 4 et 5 dans la cavité 13, de telle sorte que les saillies 14 pénètrent dans les évidements 15, et en exerçant une pression sur les deux demi-poignées 10 et 10' pour engager les ergots 11 dans les cavités 12.

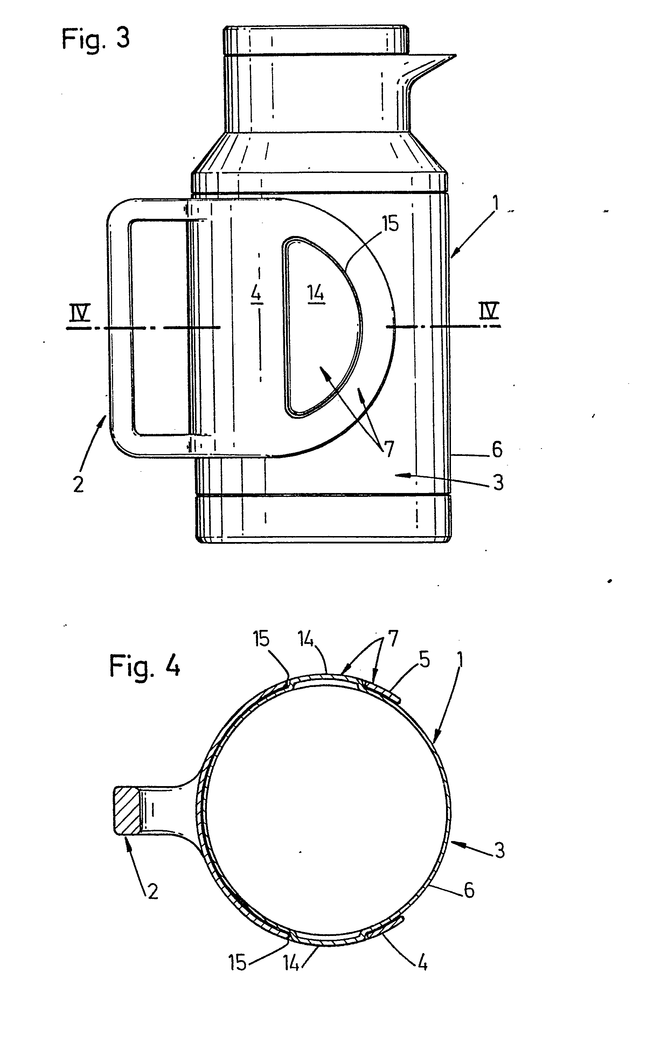

La bouteille isolante montrée aux figures 3 et 4 a une poignée 2 et des pattes 4 et 5 réalisées en une seule pièce, à l'aide d'un matériau semi-rigide, autorisant l'insertion de l'enveloppe 3 entre les pattes 4 et 5. Les moyens 7 précités permettant d'immobiliser les pattes par rapport à l'enveloppe sont constitués par deux saillies 14 pénétrant dans un évidement correspondant 15 prévu dans chacune des pattes 4 et 5.

Il doit être entendu que l'invention n'est nullement limitée aux formes de réalisation décrites et que bien des modifications peuvent être apportées à ces dernières sans sortir du cadre du présent brevet.

REVENDICATIONS.

1. Récipient (1), en particulier bouteille isolante, pourvu d'une poignée (2) disposée en saillie par rapport au récipient, ce dernier étant caractérisé en ce que ladite poignée (2) est indépendante du récipient et présente, à l'endroit où elle se raccorde audit récipient, deux pattes profilées (4)et(5) agencées de part et d'autre de la poignée et destinées à enserrer le récipient(1) sur une partie importante de sa surface latérale (6), des moyens (7) étant prévus pour immobiliser lesdites pattes (4) et (5) par rapport au récipient.

2. Récipient suivant la revendication 1, caractérisé en ce que les pattes (4) et (5) précitées sont symétriques par rapport à la poignée (2).

3. Récipient suivant l'une ou l'autre des revendications 1 et 2, caractérisé en ce que les pattes (4) et (5) ont une hauteur sensiblement égale à celle de la poignée (2) et s'étendent sous cette dernière de manière à se rejoindre et à enserrer le récipient sur une partie continue de sa surface latérale (6).

4. Récipient suivant l'une quelconque des revendications 1 à 3, caractérisé en ce que la poignée (2) et les pattes (4) et (5) sont réalisées en une seule pièce, à l'aide d'un matériau semirigide, autorisant l'insertion du récipient (1) entre les pattes (4) et (5).

5. Récipient suivant l'une ou l'autre des revendications 2 et 3, caractérisé en ce que la poignée (2) et les pattes (4) et (5) sont réalisées en deux parties symétriques (8) et (9) constituées chacune d'une patte et d'une demi-poignée (10,10'), des moyens d'assemblage étant prévus sur chacune des demi-poignées pour permettre l'assemblage des deux parties.

6. Récipient suivant l'une quelconque des revendications 1 à 5, caractérisé en ce que les moyens (7) susdits pour immobiliser les pattes (4) et (5) par rapport au récipient (1) comprennent une cavité (13), ménagée à la surface (6) du récipient, dont la forme et la surface correspondent aux forme et surface de chacune des pattes (4) et (5).

7. Récipient suivant la revendication 6, caractérisé en ce que la profondeur de la cavité (13) précitée est sensiblement égale à l'épaisseur des pattes (4) et (5).

8. Récipient suivant l'une quelconque des revendications 1 à 7, caractérisé en ce que les moyens (7) susdits pour immobiliser les pattes (4) et (5) par rapport au récipient (1) comprennent au moins une saillie (14) présentée par la surface latérale du récipient, à l'endroit où elle coopère avec chacune des pattes, et un évidement (15) correspondant ménagé dans la patte.

9. Récipient suivant la revendication 8, caractérisé en ce que l'épaisseur de la saillie (14) et la profondeur de l'évidement (15) sont sensiblement égales et correspondent à l'épaisseur des pattes (4) et (5).

Fig.1

Fig. 2

Fig. 3

Fig. 4